# EUROPEAN PATENT SPECIFICATION

(11) **EP 3 886 058 B1**
(45) Date of publication and mention of the grant of the patent: **01.10.2025**
(21) Application number: 20192750.6
(22) Date of filing: 25.08.2020
(51) Int. Cl.: G07C 9/00

(54) **HOTEL ROOM DOOR CHECK-IN**
EINCHECKEN AN EINER HOTELZIMMERTÜR
ENREGISTREMENT À LA PORTE D'UNE CHAMBRE D'HÔTEL

(30) Priority: 25.03.2020 CN 202010217934
(43) Date of publication of application: 29.09.2021
(60) Divisional application: 25191635.9
(73) Proprietor: Beijing Xiaomi Mobile Software Co., Ltd., Beijing 100085 (CN)
(72) Inventor: ZHAO, Jiankai, Beijing, 100085 (CN); LIU, Xiaohui, Beijing, 100085 (CN); ZHANG, Panpan, Beijing 100085 (CN)
(74) Representative: Gevers Patents

(56) References cited:
- EP-A2- 2 736 021
- WO-A1-2017/075952
- CN-A- 105 788 042
- CN-A- 108 320 352
- DE-A1- 102015 118 627
- US-A1- 2013 229 259

## Description

### TECHNICAL FIELD

The subject disclosure relates to the field of mobile communication, and more particularly, to an authentication method, User Equipment (UE), and a computer-readable storage medium.

### BACKGROUND

At present, a hotel is of a serving industry. A user arriving at a hotel may have to check in at the hotel reception before she / he may get a room card to access an individual room to take a rest. The user may have to check out at the hotel reception and return the room card. The user may have to wait until a hotel staff member checks that she or he is good to go. The whole process involves both the hotel staff member and the user and may take a long time. The user may run late due to a queue during rush hour. There may be a risk such as that the room card is lost, damaged, left in the room, etc. An upgraded overall solution is adopted at some hotels, where instead of being unlocked using a room card, a door is unlocked using biometrics such as facial characteristics, fingerprint characteristics, etc. However, biometrics may be used only after check-in at the hotel reception.

Document CN108320352A discloses an intelligent hotel door-lock control system and control method.

Document DE102015118627A1 shows a method for actuating a code lock in a door closing system of e.g. a hotel, involving performing aperture action by the code lock when a closing authority is determined and a current time of a clock of the code lock lies within an authority period.

Document US2013229259A1 discloses a standalone biometric authorization control device and method while document CN105788042A discloses a method for opening a Bluetooth door lock in a hotel, and judging whether a hotel room door is opened when a MAC address of a mobile terminal is matched with a MAC address of the hotel room.

### SUMMARY

In view of this, embodiments herein provide an authentication method, User Equipment (UE), and a computer-readable storage medium.

The features of the method and device are defined in the independent claims, and the preferable features are defined in the dependent claims. The following aspects are provided for illustrative purposes and examples, aspects or embodiments not falling within the scope of the appended claims are not according to the invention.

According to an aspect herein, an authentication method is applicable to a server of a hotel. The authentication method includes:
acquiring check-in information sent by User Equipment (UE) of a user checking into the hotel, wherein the check-in information may include information on the user checking in and a check-in period;
determining information on a room of the user based on the check-in information;
sending the information on the room to the UE;
determining unlocking information based on the check-in information; and
sending the unlocking information to at least one of the UE or door lock equipment corresponding to the information on the room.

The door lock equipment may be adapted to authenticating the user based on the unlocking information during the check-in period.

The unlocking information may be invalid other than during the check-in period.

The technical solution provided by embodiments herein includes beneficial effects as follows. With the authentication method herein, a user may check into a hotel efficiently without having to go through a check-in procedure at the hotel for the moment, requiring no manual handling, which is safer and more convenient.

Determining the unlocking information based on the check-in information, and sending the unlocking information to at least one of the UE or the door lock equipment corresponding to the information on the room may include:
generating Near Field Communication (NFC) information based on the check-in period; and
sending the NFC information to the UE.

The door lock equipment may be adapted to, during the check-in period, authenticating the user based on the NFC information. Alternatively, the door lock equipment may be adapted to acquiring authentication information based on the NFC information, and authenticating the user using the authentication information.

The authentication information may include facial characteristics, fingerprint characteristics, iris characteristics, voiceprint characteristics, etc.

Determining the unlocking information based on the check-in information, and sending the unlocking information to at least one of the UE or the door lock equipment corresponding to the information on the room may include:
acquiring a face image of a face of the user based on the check-in information;
extracting facial characteristics from the face image; and
sending the facial characteristics to the door lock equipment.

The door lock equipment may be adapted to authenticating the user using the facial characteristics during the check-in period.

The method may further include:
in response to determining that the check-in period expires, or in response to an invalidation instruction, sending invalidation information to the door lock equipment.

The door lock equipment may be adapted to deleting the unlocking information.

According to an aspect herein, an authentication method is applicable to User Equipment (UE). The authentication method includes:
sending, to a server of a hotel, check-in information of a user checking into the hotel, wherein the check-in information may include information on the user checking in and a check-in period;
receiving information on a room of the user, wherein the information on the room is determined by the server based on the check-in information;
receiving unlocking information, wherein the unlocking information is determined by the server based on the check-in information, wherein the unlocking information is Near Field Communication (NFC) information; and
accepting authentication by door lock equipment corresponding to the information on the room based on the NFC information during the check-in period, or sending, based on the NFC information during the check-in period, authentication information to door lock equipment corresponding to the information on the room.

The door lock equipment may be adapted to authenticating the user using the authentication information.

The advantages and technical effects of the method correspond to those of the method presented before.

The authentication information may include facial characteristics, fingerprint characteristics, iris characteristics, voiceprint characteristics, etc.

The NFC information may be invalid other than during the check-in period.

The authentication method may include sending the NFC information to wearable UE.

The wearable UE may be adapted to accepting authentication by the door lock equipment based on the NFC information.

According to an aspect herein, an authentication method is applicable to door lock equipment. The authentication method includes:
receiving a check-in period and authentication information of a user checking into a hotel, wherein the authentication information may include facial characteristics, fingerprint characteristics, iris characteristics, voiceprint characteristics, etc;
collecting identification characteristics;
authenticating the user by matching the identification characteristics to the authentication information; and
deleting the authentication information in response to determining that the check-in period expires, or in response to an invalidation instruction sent by a server of the hotel.

The advantages and technical effects of the method correspond to those of the method presented before.

Receiving the check-in period and the authentication information of the user may include receiving the check-in period and the authentication information sent by the server.

Both the check-in period and the authentication information may be acquired by the server based on check-in information of the user.

Receiving the check-in period and the authentication information of the user may include receiving, based on Near Field Communication (NFC) information, the check-in period and the authentication information sent by User Equipment (UE) of the user.

The server may be adapted to determining the NFC information based on check-in information of the user and sending the NFC information to the UE.

According to an aspect herein, an authentication device is applicable to a server of a hotel. The authentication device may include a receiving unit, a determining unit, and a sending unit.

The receiving unit may be adapted to acquiring check-in information sent by User Equipment (UE) of a user checking into the hotel. The check-in information may include information on the user checking in and a check-in period.

The determining unit may be adapted to determining information on a room of the user based on the check-in information.

The sending unit may be adapted to sending the information on the room to the UE.

The determining unit may be adapted to determining unlocking information based on the check-in information.

The sending unit may be adapted to sending the unlocking information to at least one of the UE or door lock equipment corresponding to the information on the room.

The door lock equipment may be adapted to authenticating the user based on the unlocking information during the check-in period.

The unlocking information may be invalid other than during the check-in period.

The advantages and technical effects of the device correspond to those of the method presented before.

The determining unit may be adapted to generating Near Field Communication (NFC) information based on the check-in period.

The sending unit may be adapted to sending the NFC information to the UE.

The door lock equipment may be adapted to, during the check-in period, authenticating the user based on the NFC information. Alternatively, the door lock equipment may be adapted to acquiring authentication information based on the NFC information, and authenticating the user using the authentication information.

The authentication information may include facial characteristics, fingerprint characteristics, iris characteristics, voiceprint characteristics, etc.

The determining unit may be adapted to acquiring a face image of a face of the user based on the check-in information.

The device may further include an extracting unit adapted to extracting facial characteristics from the face image.

The sending unit may be adapted to sending the facial characteristics to the door lock equipment.

The door lock equipment may be adapted to authenticating the user using the facial characteristics during the check-in period.

The sending unit may be adapted to, in response to determining that the check-in period expires, or in response to an invalidation instruction, sending invalidation information to the door lock equipment.

The door lock equipment may be adapted to deleting the unlocking information.

According to an aspect herein, an authentication device is applicable to User Equipment (UE). The authentication device may include a sending unit, a receiving unit, and a Near Field Communication (NFC) unit.

The sending unit may be adapted to sending, to a server of a hotel, check-in information of a user checking into the hotel. The check-in information may include information on the user checking in and a check-in period.

The receiving unit may be adapted to receiving information on a room of the user. The information on the room is determined by the server based on the check-in information.

The receiving unit may be adapted to receiving unlocking information. The unlocking information is determined by the server based on the check-in information. The unlocking information may be Near Field Communication (NFC) information.

The NFC unit may be adapted to accepting authentication by door lock equipment corresponding to the information on the room based on the NFC information during the check-in period. Alternatively, the NFC unit may be adapted to sending, based on the NFC information during the check-in period, authentication information to door lock equipment corresponding to the information on the room.

The door lock equipment may be adapted to authenticating the user using the authentication information.

The advantages and technical effects of the device correspond to those of the method presented before.

The authentication information may include facial characteristics, fingerprint characteristics, iris characteristics, voiceprint characteristics, etc.

The NFC information may be invalid other than during the check-in period.

The sending unit may be adapted to sending the NFC information to wearable UE.

The wearable UE may be adapted to accepting authentication by the door lock equipment based on the NFC information.

According to an aspect herein, an authentication device is applicable to door lock equipment. The authentication device may include a receiving unit, a collecting unit, an authenticating unit, and a deleting unit.

The receiving unit may be adapted to receiving a check-in period and authentication information of a user checking into a hotel. The authentication information may include facial characteristics, fingerprint characteristics, iris characteristics, voiceprint characteristics, etc.

The collecting unit may be adapted to collecting identification characteristics.

The authenticating unit may be adapted to authenticating the user by matching the identification characteristics to the authentication information.

The deleting unit may be adapted to deleting the authentication information in response to determining that the check-in period expires, or in response to an invalidation instruction sent by a server of the hotel.

The advantages and technical effects of the device correspond to those of the method presented before.

The receiving unit may be adapted to receiving the check-in period and the authentication information sent by the server.

Both the check-in period and the authentication information may be acquired by the server based on check-in information of the user.

The method may further include a Near Field Communication (NFC) unit.

The NFC unit may be adapted to receiving, based on Near Field Communication (NFC) information, the check-in period and the authentication information sent by User Equipment (UE) of the user.

The server may be adapted to determining the NFC information based on check-in information of the user and sending the NFC information to the UE.

According to an aspect herein, electronic equipment may include a processor and memory.

The memory may be adapted to storing an instruction executable by the processor.

The processor may be adapted to implementing, by calling the instruction stored in the memory, the authentication method of an aspect herein.

The advantages and technical effects of the electronic equipment correspond to those of the method presented before.

A method herein may be determined by computer program instructions.

According to an aspect herein, a transitory or non-transitory computer-readable storage medium or recording medium has stored therein instructions which, when executed by a processor, implement the authentication method of an aspect herein.

Said instructions can use any programming language and take the form of source code, object code or a code intermediate between source code and object code, such as a partially compiled form, or any other desirable form.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The above general description and detailed description below are but exemplary and explanatory, and do not limit the subject disclosure.

### BRIEF DESCRIPTION OF THE ACCOMPANYING DRAWINGS

Drawings here are incorporated in and constitute part of the specification, illustrate embodiments according to the subject disclosure, and together with the specification, serve to explain the principle of the subject disclosure.
FIG. 1 is a flowchart of an authentication method according to an exemplary embodiment.
FIG. 2 is a flowchart of an authentication method according to an exemplary embodiment.
FIG. 3 is a flowchart of an authentication method according to an exemplary embodiment.
FIG. 4 is a flowchart of an authentication method according to an exemplary embodiment.
FIG. 5 is a flowchart of an authentication method according to an exemplary embodiment.
FIG. 6 is a block diagram of an authentication device according to an exemplary embodiment.
FIG. 7 is a block diagram of an authentication device according to an exemplary embodiment.
FIG. 8 is a block diagram of an authentication device according to an exemplary embodiment.
FIG. 9 is a block diagram of an authentication device according to an exemplary embodiment.
FIG. 10 is a block diagram of an authentication device according to an exemplary embodiment.
FIG. 11 is a block diagram of a device according to an exemplary embodiment.
FIG. 12 is a block diagram of electronic equipment according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc., may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

In addition, a term such as "first", "second", etc., may serve but for description purposes and should not be construed as indication or implication of relevancy, or implication of a quantity of technical features under consideration. Accordingly, a feature with an attributive "first", "second", etc., may expressly or implicitly include at least one such feature. Herein by "multiple", it may mean two or more unless indicated otherwise expressly.

The features of the method and device are defined in the independent claims, and the preferable features are defined in the dependent claims. The following aspects are provided for illustrative purposes.

In certain art, a check-in proof may be handed out or taken back manually by a staff member at the hotel reception when a user (i.e., a guest) checks in(to a hotel). This requires manual participation of both hotel staff and the user and may take a long time. The user may run late due to a queue during rush hour. In addition, a physical room card is required. There may be a risk such as that the room card is lost, damaged, left in the room, etc.

In other art, Near Field Communication (NFC) may be supported by an application of a mobile phone. After a user gets a room card, the room card may be simulated by the mobile phone. Then, a door may be unlocked using the mobile phone. However, a room card of a hotel may be encrypted and may not be simulated automatically using NFC. Furthermore, it still requires manual participation of both hotel staff and the user and may take a long time. The user may run late due to a queue during rush hour. A physical room card is still required as well. There may be a risk such as that the room card is lost, damaged, etc.

In other art, a door of room at a hotel may be unlocked through face identification or fingerprint identification. A user may enter face or fingerprint information when checking in at the hotel reception. Then, the user may unlock and enter a door of her / his room using a camera or a fingerprint lock at the door. This requires additional entry of face or fingerprint information at check-in. This still requires manual participation of both hotel staff and the user and may take a long time. The user may run late due to a queue during rush hour.

In view of this, embodiments herein provide an authentication method 10 applicable to a server of a hotel, an authentication method 20 applicable to UE of a user checking into the hotel, and an authentication method 30 applicable to door lock equipment of the hotel. The methods are elaborated below, respectively.

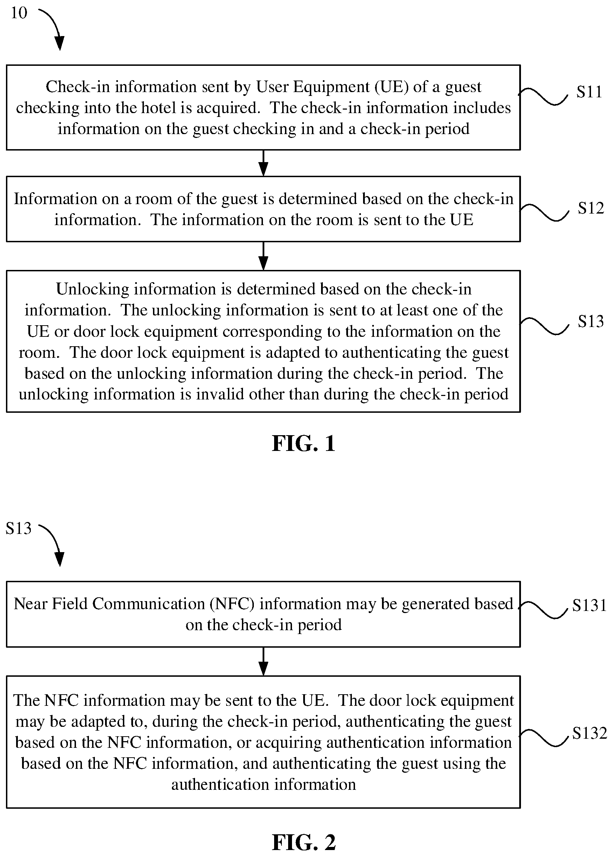

The authentication method 10 is applicable to a server of a hotel. A server of a hotel may communicate, through a web page or an application, with UE of a user who is to check into the hotel. A server of a hotel may communicate, through a network internal to the hotel, etc., with door lock equipment of a room of the hotel. As shown in FIG. 1, an authentication method 10 includes S11 to S13.

In S11, check-in information sent by User Equipment (UE) of a user checking into the hotel is acquired. The check-in information includes information on the user checking in and a check-in period.

A user may book a hotel using a web page or an application in UE. A server of the hotel may acquire check-in information of the user. Check-in information includes at least information on the user, such as a name, an ID number, etc. Check-in information further includes a check-in period, that is, a check-in time and a check-out time of a user.

In S12, information on a room of the user is determined based on the check-in information. The information on the room is sent to the UE.

Check-in information is acquired. Then, information on a room of a user may be determined. Any available room may be displayed according to a filter condition such as a number of users checking in, check-in periods, etc. Information on a room of the user may be determined by letting the user select the room. Information on a room of a user may be determined by a hotel according to a number of users checking in, check-in periods, etc. After information on a room of a user is determined, the information on the room is sent to UE of the user. Accordingly, the user may conveniently learn the room she or he is to check in. Information on a room may include a room number of the room, a location of the room, etc.

In S13, unlocking information is determined based on the check-in information. The unlocking information is sent to the UE, and may be sent to the door lock equipment corresponding to the information on the room. The door lock equipment is adapted to authenticating the user based on the unlocking information during the check-in period. The unlocking information may be invalid other than during the check-in period.

Once check-in information is determined, to allow a user to enter a booked room conveniently without a hitch without having to go through any manual service at the reception upon check-in, unlocking information is sent to the UE of the user, and may be sent to the door lock equipment of the booked room. Accordingly, during a check-in period, a user may be authenticated by door lock equipment and enter a room. Accordingly, a labor cost and a waiting time may be reduced greatly, improving efficiency. Accordingly, a user may check into a hotel safely and quickly.

As shown in FIG. 2, S13 may include a step as follows. In S131, Near Field Communication (NFC) information may be generated based on the check-in period. In S 132, the NFC information may be sent to the UE. The door lock equipment may be adapted to, during the check-in period, authenticating the user based on the NFC information, or acquiring authentication information based on the NFC information, and authenticating the user using the authentication information. Data exchange and authentication may be performed via NFC. A server of a hotel may generate NFC information with an expiration period. After receiving the NFC information, UE of a user may simulate a virtual card. Door lock equipment may authenticate the user by authenticating the virtual card. The expiration period may expire upon expiration of a check-in period. A result of authentication by door lock equipment may show that the virtual card is invalid. Accordingly, a door is not unlocked. A server of a hotel may generate NFC information adapted to interacting with door lock equipment. UE of a user may send authentication information stored in the UE to door lock equipment by exchanging data with the door lock equipment via NFC based on the NFC information. The authentication information may be adapted to authenticating the user. The authentication information includes facial characteristics, and may include biometrics such as fingerprint characteristics, iris characteristics, voiceprint characteristics, etc. Door lock equipment may authenticate a user by collecting the relevant characteristics of the user in real time and comparing / matching the relevant characteristics to authentication information. With NFC, a user may be authenticated conveniently without having to go through a check-in procedure for the moment, which is safer.

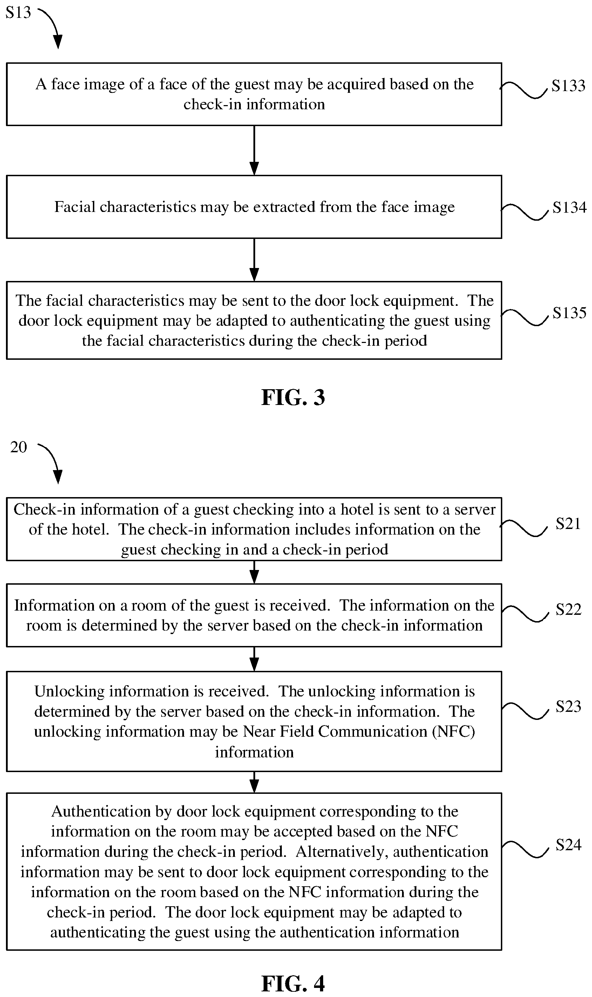

As shown in FIG. 3, S13 may further include a step as follows. In S133, a face image of a face of the user may be acquired based on the check-in information. In S134, facial characteristics are extracted from the face image. In S135, the facial characteristics are sent to the door lock equipment. The door lock equipment may be adapted to authenticating the user using the facial characteristics during the check-in period. A server of a hotel may acquire a face image of the face of a user based on check-in information. For example, the face image may be collected in real time using UE, and then sent to the server. Alternatively, the face image may be acquired using a photo in an ID card of the user. Facial characteristics are extracted from the face image using a neural network model, etc. The facial characteristics are then sent to door lock equipment. When the user is to enter a room, the door lock equipment may collect the face image of the face of the user in real time. The door lock equipment per se may authenticate the user by comparing facial characteristics. Door lock equipment may delete stored facial characteristics upon expiration of a check-in period. Alternatively, a server of a hotel may send an invalidation instruction to door lock equipment. Accordingly, the door lock equipment may delete facial characteristics. Thereby, hotel check-in is managed conveniently while securing privacy of a user. Characteristics may be saved in a server of a hotel. Door lock equipment may collect a face image of the face of a user. The door lock equipment may send the face image to the server. The server may extract facial characteristics from the face image and compare the facial characteristics. The server may send a result of comparison, an unlocking instruction, a locking instruction, etc., to the door lock equipment to authenticate the user.

Described is the authentication method 10 applicable to a server of the hotel according to embodiments herein. An authentication method 20 applicable to UE is described below.

The authentication method 20 is applicable to User Equipment (UE). The UE may be a mobile phone, a tablet computer, etc. The UE may communicate, through a web page or an application, with a server of the hotel. The UE may be provide with an NFC module. The UE may exchange data with, or authenticate, equipment via NFC. As shown in FIG. 4, the authentication method 20 includes S21 to S24.

In S21, check-in information of a user checking into a hotel is sent to a server of the hotel. The check-in information includes information on the user checking in and a check-in period.

A user may book a room through a web page or an application. Information on identity of the user, an expected check-in time, an expected check-out time, etc., may be sent to the server of the hotel.

In S22, information on a room of the user is received. The information on the room is determined by the server based on the check-in information.

After determining a room, the hotel may send information on the room such as a room number to UE. A user may acquire information on a room by selecting the room.

In S23, unlocking information is received. The unlocking information is determined by the server based on the check-in information. The unlocking information may be Near Field Communication (NFC) information.

A hotel may generate NFC information based on check-in information. The hotel may the NFC information to UE. The UE may exchange data or be authenticated straightforwardly via NFC.

In S24, authentication by door lock equipment corresponding to the information on the room may be accepted based on the NFC information during the check-in period. Alternatively, authentication information is sent to door lock equipment corresponding to the information on the room based on the NFC information during the check-in period. The door lock equipment may be adapted to authenticating the user using the authentication information.

UE may generate a virtual card based on NFC information. Door lock equipment may read the virtual card at close range via NFC, thereby authenticating a user and performing an operation accordingly, such as unlocking a door, etc. Moreover, NFC information may include expiration information. After a check-in period expires, the NFC information and the virtual card generated may be invalidated automatically.

UE may send NFC information to wearable UE. The wearable UE may be adapted to accepting authentication by door lock equipment based on the NFC information. The wearable UE may be equipment, such as a wristband, a watch, etc., with an NFC module. The wearable UE may generate a virtual card using the NFC information. The door lock equipment may authenticate a user by authenticating the virtual card.

UE may send authentication information to door lock equipment by exchanging data with the door lock equipment (which may likewise be provided with an NFC module) based on NFC information. Authentication information includes facial characteristics, and may include biometrics such as fingerprint characteristics, iris characteristics, voiceprint characteristics, etc. When a user is to unlock a door, door lock equipment may authenticate the user by collecting, in real time, an image of the user corresponding to the biometrics and comparing the characteristics.

With the authentication method herein, a user spends less time checking in, and checks in and out safely and efficiently.

Described are the authentication method 10 applicable to a server of the hotel and the authentication method 20 applicable to UE according to embodiments herein. An authentication method 30 applicable to door lock equipment is described below.

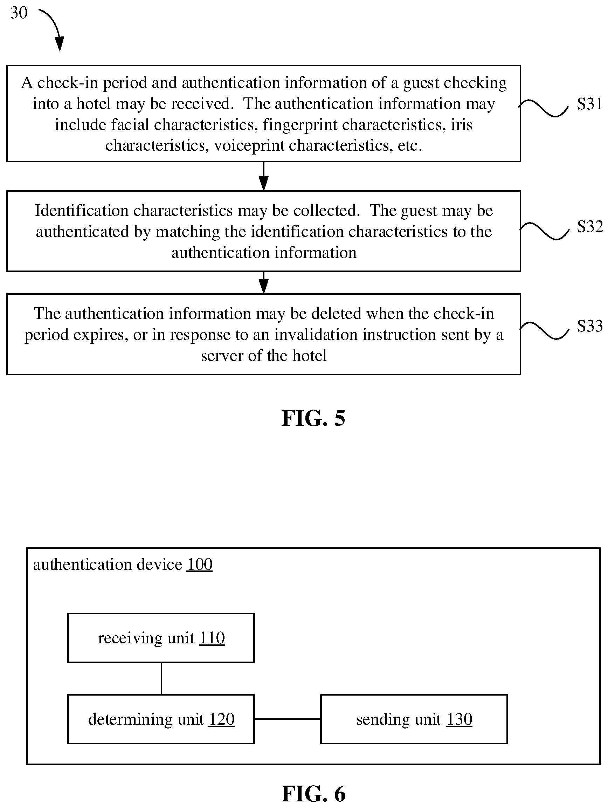

An authentication method 30 is applicable to door lock equipment. Door lock equipment may be a smart door lock of the hotel. Door lock equipment may be connected to and communicate with a server of the hotel. Door lock equipment may be provided with a module for collecting biometrics, such as a module for collecting an image, a fingerprint, etc. Door lock equipment may be provided with an NFC module for data exchange or authentication. By performing authentication, door lock equipment may either unlock a door, or keep the door locked. As shown in FIG. 5, an authentication method 30 includes S31 to S33.

In S31, a check-in period and authentication information of a user checking into a hotel may be received. The authentication information includes facial characteristics, and may include fingerprint characteristics, iris characteristics, voiceprint characteristics, etc.

Door lock equipment may receive a check-in period and authentication information sent by a server of the hotel. Both the check-in period and the authentication information may be acquired by the server based on check-in information of a user. The server may acquire the authentication information of the user and send the authentication information to the door lock equipment. The door lock equipment may authenticate the user based on the authentication information. Moreover, the check-in period may secure a time period during which the authentication information is applicable. The authentication information may be invalidated and deleted automatically upon expiration of the check-in period.

Door lock equipment may receive a check-in period and authentication information sent by UE of a user using NFC information of the UE based on NFC. The NFC information may be determined by a server of the hotel based on check-in information of the user, and sent to the UE. The door lock equipment may authenticate the user based on the authentication information.

In S32, identification characteristics may be collected. The user may be authenticated by matching the identification characteristics to the authentication information.

Information corresponding to authentication information may be collected. For example, authentication information includes facial characteristics. Then, a face image may be collected. Authentication information may include fingerprint information. Then, a fingerprint may be collected. Authentication information may include voiceprint information. Then, a voice may be collected. Characteristics may be extracted from collected information and matched to authentication information. If they match, a user may be authenticated successfully, and an operation such as unlocking may be performed. If they don't, a locked state may remain.

In S33, the authentication information may be deleted when the check-in period expires, or in response to an invalidation instruction sent by a server of the hotel.

In order to secure information and manage check-ins, authentication information may be deleted automatically when a check-in period expires. Alternatively, after a server of the hotel has sent an invalidation instruction to door lock equipment, the door lock equipment may delete authentication information saved thereon. After authentication information has been deleted, a user cannot be authenticated successfully by comparing identification characteristics to the authentication information.

Door lock equipment may collect, using a module for collecting biometrics, biometrics of a user such as a face image, a fingerprint image, an iris image, a voice, etc. The door lock equipment may send the collected biometrics to a server of the hotel. The server may extract and compare characteristics. The server may send a result of the comparison to the door lock equipment. Alternatively, the server may send, to the door lock equipment, an unlocking instruction or a locking instruction generated based on the result of the comparison.

Door lock equipment may be provided with an NFC module adapted to authenticating a swipe card or a virtual card. A user may acquire NFC information from a server of the hotel, etc. A virtual card may be generated. Upon detecting a virtual card, door lock equipment may authenticate the identity and perform an unlock operation such as to unlock a door. Meanwhile, a swipe card or a virtual card may have expiration information. When a check-in period of a user expires, authentication of the user by door lock equipment may fail.

With an authentication method 10, an authentication method 20, or an authentication method 30 herein, a hotel may be managed more efficiently. A user may check into a hotel more efficiently. A user may check in and check out conveniently and safely.

Based on the same inventive concept, FIG. 6 shows an authentication device 100 applicable to a server of a hotel. The authentication device 100 includes a receiving unit, a determining unit, and a sending unit. The receiving unit 110 is adapted to acquiring check-in information sent by User Equipment (UE) of a user checking into the hotel. The check-in information includes information on the user checking in and a check-in period. The determining unit 120 is adapted to determining information on a room of the user based on the check-in information. The sending unit 130 is adapted to sending the information on the room to the UE. The determining unit 120 is adapted to determining unlocking information based on the check-in information. The sending unit 130 is adapted to sending the unlocking information to at least one of the UE or door lock equipment corresponding to the information on the room. The door lock equipment is adapted to authenticating the user based on the unlocking information during the check-in period. The unlocking information may be invalid other than during the check-in period.

The determining unit 120 may be adapted to generating Near Field Communication (NFC) information based on the check-in period. The sending unit 130 may be adapted to sending the NFC information to the UE. The door lock equipment may be adapted to, during the check-in period, authenticating the user based on the NFC information, or acquiring authentication information based on the NFC information, and authenticating the user using the authentication information.

The authentication information includes facial characteristics, and may include fingerprint characteristics, iris characteristics, voiceprint characteristics, etc.

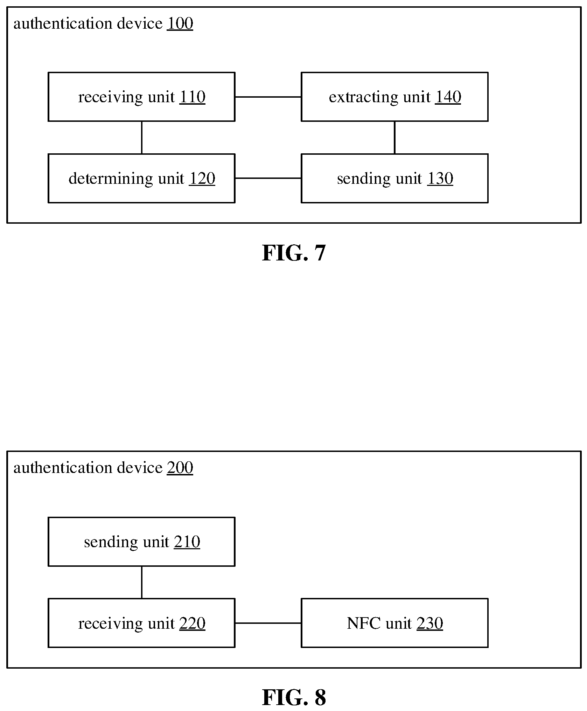

As shown in FIG. 7, the determining unit 120 may be adapted to acquiring a face image of a face of the user based on the check-in information. The authentication device 100 may further include an extracting unit 140 adapted to extracting facial characteristics from the face image. The sending unit 130 may be adapted to sending the facial characteristics to the door lock equipment. The door lock equipment may be adapted to authenticating the user using the facial characteristics during the check-in period.

The sending unit 130 may be adapted to, in response to determining that the check-in period expires, or in response to an invalidation instruction, sending invalidation information to the door lock equipment. The door lock equipment is adapted to deleting the unlocking information.

A module of the authentication device 100 according to at least one embodiment herein may perform an operation in a mode elaborated in at least one embodiment of the authentication method 10 herein, which will not be repeated here.

Based on the same inventive concept, FIG. 8 shows an authentication device 200 applicable to User Equipment (UE). The authentication device 200 includes a sending unit, a receiving unit, and a Near Field Communication (NFC) unit. The sending unit 210 is adapted to sending, to a server of a hotel, check-in information of a user checking into the hotel. The check-in information includes information on the user checking in and a check-in period. The receiving unit 220 is adapted to receiving information on a room of the user. The information on the room is determined by the server based on the check-in information. The receiving unit 220 is adapted to receiving unlocking information. The unlocking information is determined by the server based on the check-in information. The unlocking information is Near Field Communication (NFC) information. The NFC unit 230 is adapted to accepting authentication by door lock equipment corresponding to the information on the room based on the NFC information during the check-in period. Alternatively, the NFC unit is adapted to sending, based on the NFC information during the check-in period, authentication information to door lock equipment corresponding to the information on the room. The door lock equipment is adapted to authenticating the user using the authentication information.

The authentication information includes facial characteristics, and may include fingerprint characteristics, iris characteristics, voiceprint characteristics, etc.

The NFC information may be invalid other than during the check-in period.

The sending unit 210 may be adapted to sending the NFC information to wearable UE. The wearable UE may be adapted to accepting authentication by the door lock equipment based on the NFC information.

A module of the authentication device 200 according to at least one embodiment herein may perform an operation in a mode elaborated in at least one embodiment of the authentication method 20 herein, which will not be repeated here.

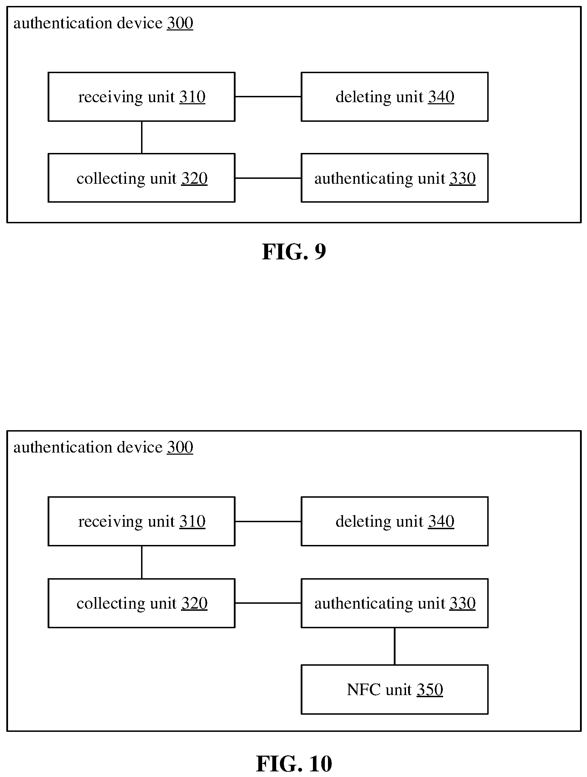

Based on the same inventive concept, FIG. 9 shows an authentication device 300 applicable to door lock equipment. The authentication device 300 includes a receiving unit, a collecting unit, an authenticating unit, and a deleting unit. The receiving unit 310 is adapted to receiving a check-in period and authentication information of a user checking into a hotel. The authentication information includes facial characteristics, and may include fingerprint characteristics, iris characteristics, voiceprint characteristics, etc. The collecting unit 320 is adapted to collecting identification characteristics. The authenticating unit 330 is adapted to authenticating the user by matching the identification characteristics to the authentication information. The deleting unit 340 is adapted to deleting the authentication information in response to determining that the check-in period expires. Alternatively, the deleting unit is adapted to deleting the authentication information in response to an invalidation instruction sent by a server of the hotel.

The receiving unit 310 may be adapted to receiving the check-in period and the authentication information sent by the server. Both the check-in period and the authentication information may be acquired by the server based on check-in information of the user.

As shown in FIG. 10, the authentication device 300 may further include a Near Field Communication (NFC) unit. The NFC unit 350 may be adapted to receiving, based on Near Field Communication (NFC) information, the check-in period and the authentication information sent by User Equipment (UE) of the user. The NFC information may be determined by the server based on check-in information of the user, and sent to the UE.

A module of the authentication device 300 according to at least one embodiment herein may perform an operation in a mode elaborated in at least one embodiment of the authentication method 30 herein, which will not be repeated here.

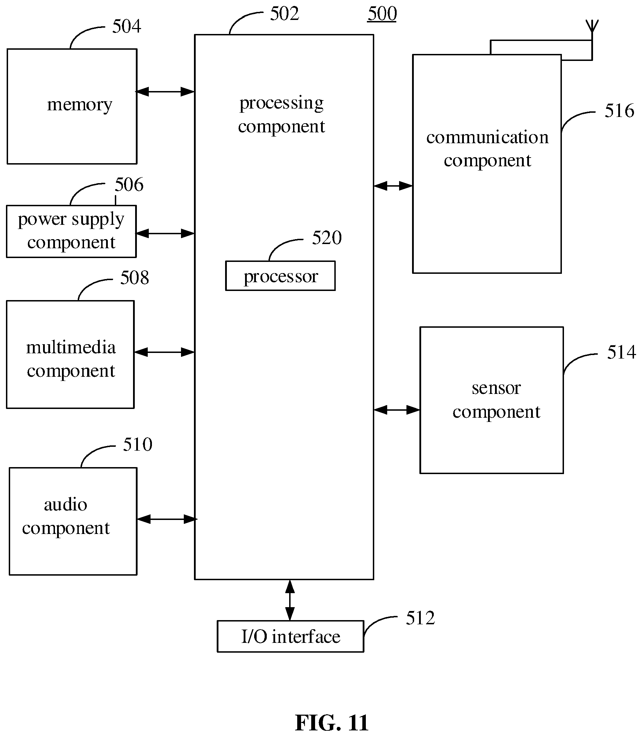

FIG. 11 is a block diagram of any aforementioned device according to an exemplary embodiment. For example, the device 500 may be a mobile phone, a computer, digital broadcast UE, messaging equipment, a gaming console, tablet equipment, medical equipment, fitness equipment, a personal digital assistant, etc.

Referring to FIG. 11, the device 500 may include at least one of a processing component 502, memory 504, a power supply component 506, a multimedia component 508, an audio component 510, an Input / Output (I / O) interface 512, a sensor component 514, a communication component 516, etc.

The processing component 502 may generally control an overall operation of the device 500, such as operations associated with display, a telephone call, data communication, a camera operation, a recording operation, etc. The processing component 502 may include one or more processors 520 to execute instructions so as to complete all or a part of an aforementioned method. In addition, the processing component 502 may include one or more modules to facilitate interaction between the processing component 502 and other components. For example, the processing component 502 may include a multimedia portion to facilitate interaction between the multimedia component 508 and the processing component 502.

The memory 504 may be adapted to storing various types of data to support the operation at the device 500. Examples of such data may include instructions of any application or method adapted to operating on the device 500, contact data, phonebook data, messages, pictures, videos, etc. The memory 504 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 506 may supply electric power to various components of the device 500. The power supply component 506 may include a power management system, one or more power sources, and other components related to generating, managing, and distributing electricity for the device 500.

The multimedia component 508 may include a screen that provides an output interface between the device 500 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 508 may include at least one of a front camera or a rear camera. When the device 500 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 510 may be adapted to outputting and / or inputting an audio signal. For example, the audio component 510 may include a microphone (MIC). When the device 500 is in an operation mode such as a call mode, a recording mode, a voice recognition mode, etc., the MIC may be adapted to receiving an external audio signal. The received audio signal may be further stored in the memory 504 or may be sent via the communication component 516. The audio component 510 may further include a loudspeaker adapted to outputting the audio signal.

The I / O interface 512 may provide an interface between the processing component 502 and a peripheral interface portion. Such a peripheral interface portion may be a keypad, a click wheel, a button, etc. Such a button may include but is not limited to at least one of a homepage button, a volume button, a start button, or a lock button.

The sensor component 514 may include one or more sensors for assessing various states of the device 500. For example, the sensor component 514 may detect an on/off state of the device 500 and relative positioning of components such as the display and the keypad of the device 500. The sensor component 514 may further detect a change in the position of the device 500 or of a component of the device 500, whether there is contact between the device 500 and a user, the orientation or acceleration / deceleration of the device 500, a change in the temperature of the device 500, etc. The sensor component 514 may include a proximity sensor adapted to detecting existence of a nearby object without physical contact. The sensor component 514 may further include an optical sensor such as a Complementary Metal-Oxide-Semiconductor (CMOS) or a Charge-Coupled-Device (CCD) image sensor used in an imaging application. The sensor component 514 may further include an acceleration sensor, a gyroscope sensor, a magnetic sensor, a pressure sensor, a temperature sensor, etc.

The communication component 516 may be adapted to facilitating wired or wireless communication between the device 500 and other equipment. The device 500 may access a wireless network based on a communication standard such as Wi-Fi, 2G, 3G..., or a combination thereof. The communication component 516 may broadcast related information or receive a broadcast signal from an external broadcast management system via a broadcast channel. The communication component 516 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

In an exemplary embodiment, the device 500 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement the method.

In an exemplary embodiment, a non-transitory computer-readable storage medium including instructions, such as memory 504 including instructions, may be provided. The instructions may be executed by the processor 520 of the device 500 to implement an aforementioned method. For example, the non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

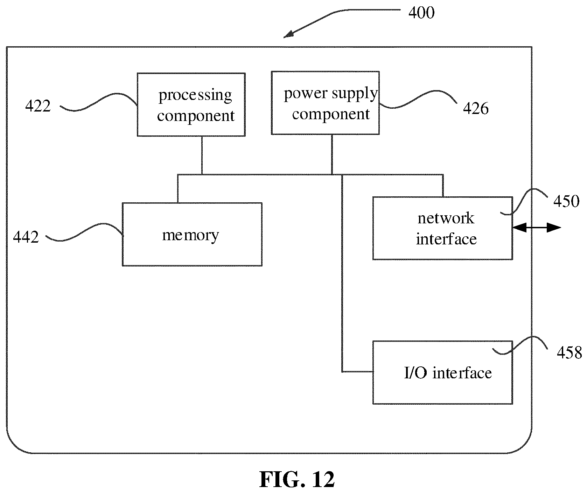

FIG. 12 is a block diagram of electronic equipment 400 according to an exemplary embodiment. For example, the equipment 400 may be provided as a server. Referring to FIG. 12, the device 400 may include a processing component 422. The processing component may include one or more processors. The device may include a memory resource represented by memory 442. The memory may be adapted to storing an instruction executable by the processing component 422, such as an APP. The APP stored in the memory 442 may include one or more modules. Each of the modules may correspond to a group of instructions. In addition, the processing component 422 may be adapted to executing instructions to perform the method herein.

The device 400 may further include a power supply component 426. The power supply component may be adapted to managing power of the device 400. The device may further include a wired or wireless network interface 450 adapted to connecting the device 400 to a network. The device may further include an Input / Output (I / O) interface 458. The device 400 may operate based on an operating system stored in the memory 442, such as an Android, an iOS, a Windows ServerTM, a Mac OS XTM, a UnixTM, a LinuxTM, a FreeBSDTM, etc.

According to an exemplary embodiment herein, a computer-readable storage medium including instructions, such as the memory 442 including instructions, may be provided. The instructions may be executed by the processing component 422 of the device 400 to implement an aforementioned method. For example, the computer-readable storage medium may be Read-Only Memory (ROM), Random Access Memory (RAM), Compact Disc Read-Only Memory (CD-ROM), a magnetic tape, a floppy disk, optical data storage equipment, etc.

When the instructions in the memory 442 are executed by the processing component 422, the device 400 is allowed to perform any method disclosed herein.

Other implementations of the subject disclosure will be apparent to a person having ordinary skill in the art that has considered the specification and or practiced the subject disclosure. The subject disclosure is intended to cover any variation, use, or adaptation of the subject disclosure following the general principles of the subject disclosure and including such departures from the subject disclosure as come within common knowledge or customary practice in the art. The specification and the embodiments are intended to be exemplary only, with a true scope of the subject disclosure being indicated by the appended claims.

Note that the subject disclosure is not limited to the exact construction that has been described above and illustrated in the accompanying drawings, and that various modifications and changes can be made to the subject disclosure without departing from the scope of the subject disclosure. It is intended that the scope of the subject disclosure is limited only by the appended claims.

## Claims

1. An authentication method, comprising:
sending, by User Equipment, UE, (500) to a server (400) of a hotel, check-in information of a user checking into the hotel (S21), wherein the check-in information comprises information on the user checking in and a check-in period;
receiving, by the UE (500), information on a room for the user (S22), wherein the information on the room is determined by the server (400) based on the check-in information;
receiving, by the UE (500), unlocking information (S23), wherein the unlocking information is determined by the server (400) based on the check-in information;
and
sending, by the UE (500) based on the unlocking information during the check-in period, authentication information to door lock equipment corresponding to the information on the room (S24),
**characterized in that** the authentication information comprises facial characteristics extracted from a face image of a face of the user using a neural network model.

2. The authentication method of claim 1, wherein the unlocking information is invalid other than during the check-in period.

3. The authentication method of claim 1 or 2, further comprising
sending, by the UE (500), the unlocking information to a wearable UE.

4. User Equipment, UE (500), comprising a processor (520) and a memory (504), wherein the processor (520) is configured to implement the authentication method of any one of claims 1 to 3.

5. A computer-readable storage medium, having stored therein instructions which, when executed by a processor, implement the authentication method of any one of claims 1 to 3.

## Patentansprüche

1. Authentifizierungsverfahren, umfassend:
Senden von Check-in-Informationen eines im Hotel eincheckenden Benutzers (S21) durch eine Benutzerausrüstung, UE, (500) an einen Server (400) eines Hotels, wobei die Check-in-Informationen Informationen über den eincheckenden Benutzer und einen Check-in-Zeitraum umfassen;
Empfangen von Informationen über ein Zimmer für den Benutzer (S22) durch die UE (500), wobei die Informationen über das Zimmer vom Server (400) auf Basis der Check-in-Informationen bestimmt werden;
Empfangen von Entsperrinformationen (S23) durch die UE (500), wobei die Entsperrinformationen vom Server (400) auf Basis der Check-in-Informationen bestimmt werden;
und
Senden von Authentifizierungsinformationen durch die UE (500) auf Basis der Entsperrinformationen während des Check-in-Zeitraums an Türschlossausrüstung, die den Informationen über das Zimmer (S24) entspricht,
**dadurch gekennzeichnet, dass** die Authentifizierungsinformationen Gesichtsmerkmale umfassen, die unter Verwendung eines neuronalen Netzwerkmodells aus einem Gesichtsbild eines Gesichts des Benutzers extrahiert werden.

2. Authentifizierungsverfahren nach Anspruch 1, wobei die Entsperrinformationen außer während des Check-in-Zeitraums ungültig sind.

3. Authentifizierungsverfahren nach Anspruch 1 oder 2, weiter umfassend
Senden der Entsperrinformationen durch die UE (500) an eine tragbare UE.

4. Benutzerausrüstung, UE (500), die einen Prozessor (520) und einen Speicher (504) umfasst, wobei der
Prozessor (520) so konfiguriert ist, dass er das Authentifizierungsverfahren nach einem der Ansprüche 1 bis 3 implementiert.

5. Computerlesbares Speichermedium, auf dem Anweisungen gespeichert sind, die, wenn sie von einem Prozessor ausgeführt werden, das Authentifizierungsverfahren nach einem der Ansprüche 1 bis 3 implementieren.

## Revendications

1. Procédé d'authentification, comprenant :
l'envoi, par un équipement d'utilisateur, UE, (500) à un serveur (400) d'un hôtel, d'informations d'enregistrement d'un utilisateur s'enregistrant à l'hôtel (S21), dans lequel les informations d'enregistrement comprennent des informations sur l'utilisateur s'enregistrant et une période d'enregistrement ;
la réception, par l'UE (500), d'informations sur une chambre pour l'utilisateur (S22), dans lequel les informations relatives à la chambre sont déterminées par le serveur (400) sur la base des informations d'enregistrement ;
la réception, par l'UE (500), d'informations de déverrouillage (S23), dans lequel les informations de déverrouillage sont déterminées par le serveur (400) sur la base des informations d'enregistrement ;
et
l'envoi, par l'UE (500) sur la base des informations de déverrouillage pendant la période d'enregistrement, d'informations d'authentification à l'équipement de verrouillage de porte correspondant aux informations relatives à la chambre (S24),
**caractérisé en ce que** les informations d'authentification comprennent des caractéristiques faciales extraites d'une image de visage d'un visage de l'utilisateur à l'aide d'un modèle de réseau neuronal.

2. Procédé d'authentification selon la revendication 1, dans lequel les informations de déverrouillage ne sont pas valides en dehors de la période d'enregistrement.

3. Procédé d'authentification selon la revendication 1 ou 2, comprenant en outre
l'envoi, par l'UE (500), des informations de déverrouillage à un UE portable.

4. Équipement utilisateur, UE (500), comprenant un processeur (520) et une mémoire (504), dans lequel le
processeur est configuré pour mettre en œuvre le procédé d'authentification selon l'une quelconque des revendications 1 à 3.

5. Support de stockage lisible par ordinateur sur lequel sont stockées des instructions qui, lorsqu'elles sont exécutées par un processeur, mettent en œuvre le procédé d'authentification selon l'une quelconque des revendications 1 à 3.
